# FASCICULE DE BREVET EUROPEEN

(11) **EP 3 215 779 B1**
(45) Date de publication et mention de la délivrance du brevet: **05.09.2018**
(21) Numéro de dépôt: 14812581.8
(22) Date de dépôt: 05.11.2014
(51) Int. Cl.: F16L 33/213, F16L 33/22, F16L 37/088, F16L 37/14, F16L 47/24, F16L 17/03, B29C 65/56, B29C 65/00

(54) **DISPOSITIF DE RACCORDEMENT D'UN EMBOUT MALE RIGIDE A UN TUYAU FEMELLE SOUPLE, ET SON PROCÉDÉ DE FABRICATION**
VORRICHTUNG ZUR BEFESTIGUNG EINES STARREN STECKERENDSTÜCKS AN EINEM FLEXIBLEN AUFNAHMEROHR UND HERSTELLUNGSVERFAHREN DAFÜR
DEVICE FOR COUPLING A RIGID MALE ENDPIECE TO A FLEXIBLE FEMALE PIPE, AND PRODUCTION METHOD THEREFOR

(43) Date de publication de la demande: 13.09.2017
(73) Titulaire: Hutchinson, 75008 Paris (FR)
(72) Inventeur: GROUILLET, Philippe, F-45700 Conflans sur Loing (FR); GODEAU, Denis, F-45260 Vieilles Maisons (FR)
(74) Mandataire: Gevers & Orès
(86) Numéro de dépôt international: PCT/FR2014/052821
(87) Numéro de publication internationale: WO 2016/071582

(56) Documents cités:
- EP-A1- 0 621 432
- EP-A1- 2 042 795
- DE-A1-102004 016 597
- US-A- 5 226 680

## Description

La présente invention concerne un dispositif de raccordement pour transfert de fluide adapté pour raccorder un embout mâle rigide à un tuyau femelle souple par exemple élastomère, et un procédé de fabrication de ce dispositif. L'invention s'applique notamment à des raccords rapides dans le domaine automobile, incluant des véhicules mus par un moteur de combustion interne de type tourisme, utilitaire, poids-lourd, de chantier (e.g. de génie civil), ou même agricole, et dans le domaine des installations à poste fixe (e.g. groupes électrogènes, compresseurs, pompes) utilisant un moteur à combustion analogue. Pour ces deux groupes d'applications, le dispositif selon l'invention peut en particulier équiper un circuit de dépollution, de refroidissement ou avantageusement d'alimentation d'air.

D'une manière générale dans un circuit de transfert de fluide pour véhicule automobile, il est connu, pour raccorder de manière étanche un tuyau souple à un embout mâle rigide verrouillable, d'utiliser un dispositif de raccordement comprenant un corps de connecteur polymérique dont une extrémité reçoit l'embout mâle, autour duquel le tuyau est emmanché. Le dispositif comprend en outre un collier métallique pour sécuriser le serrage du tuyau sur le corps de connecteur. Un inconvénient majeur de ce dispositif de raccordement réside dans le risque d'altération du tuyau par le collier en fonctionnement et dans un encombrement important du dispositif.

Il est également connu de réaliser l'ensemble du corps de connecteur en matériau métallique formé et d'y fixer le tuyau par une déformation locale d'une douille cylindrique, ce qui présente les inconvénients de nécessiter un procédé de formage complexe du corps avec comme conséquence un coût d'outillage et de fabrication élevés, et de présenter un manque d'adaptabilité du dispositif (avec insertion dans une gorge fermée d'une garniture d'étanchéité devant être nécessairement sans armature).

Le document US-A-5 226 680 enseigne de raccorder un embout mâle rigide à un tuyau souple par un manchon plastique assemblé à une douille métallique mandrinée au niveau d'une collerette d'extrémité de la douille qui reçoit une garniture d'étanchéité et qui est définie par un décrochement radial se prolongeant à angle droit par une extrémité axiale de la collerette. Le manchon est assemblé à la collerette par l'intermédiaire, d'une part, d'une unique extension radiale circonférentielle du manchon formée d'un court bourrelet continu monté en butée contre la naissance de l'extrémité axiale de la douille et, d'autre part, d'une portion radiale annulaire du manchon qui enserre le bout libre de cette extrémité axiale. Le tuyau est ainsi enserré entre le manchon et la douille axialement à distance de ce décrochement, avec utilisation d'un organe de verrouillage plastique se terminant par trois saillies radiales respectivement montées en butée contre trois bras du manchon enserrant une saillie circonférentielle de l'embout mâle.

Un inconvénient majeur de ce dispositif de raccordement réside dans la structure complexe et encombrante du manchon et de son assemblage à la douille des deux côtés arrière et avant de sa collerette respectivement par ladite extension radiale et par ladite portion radiale du manchon. Le document FR 3 022 321 A1 au nom de la Demanderesse est publié après la date de dépôt de la présente demande et présente un dispositif pour raccorder un embout mâle à saillie de raccordement à un tuyau femelle, comprenant :
- un manchon enserrant le tuyau et verrouillant la saillie par un organe de verrouillage, le manchon présentant une partie radialement interne entourant une garniture d'étanchéité montée sur l'embout,
- une douille à portion tubulaire enserrée par le tuyau et se terminant par une collerette à décrochement radial se prolongeant par une extrémité axiale montée à l'intérieur et au contact de la partie radialement interne et formant un fond d'une gorge annulaire recevant la garniture, et
- des moyens d'assemblage mécanique du manchon à la collerette qui comprennent des butées discontinues solidaires ou non du manchon et s'étendant sensiblement radialement en regard du décrochement.

Un but de la présente invention est de proposer un nouveau dispositif de raccordement par exemple encliquetable pour transfert de fluide adapté pour raccorder un embout mâle rigide présentant une saillie circonférentielle de raccordement à un tuyau femelle souple, qui remédie aux inconvénients précités et comprend :
- un manchon adapté pour enserrer le tuyau et verrouiller axialement l'embout par un organe de verrouillage dont est pourvu le manchon et qui coopère avec ladite saillie, le manchon présentant une partie radialement interne destinée à entourer une garniture d'étanchéité annulaire montée en appui sur l'embout, et
- une douille comprenant une portion tubulaire destinée à être enserrée par le tuyau et se terminant par une collerette comprenant un décrochement radial qui se prolonge par une extrémité axiale de la douille et qui présente une hauteur radiale de décrochement, ladite extrémité axiale étant montée radialement à l'intérieur et au contact de ladite partie radialement interne et formant un fond d'une gorge annulaire adaptée pour recevoir la garniture,
le dispositif comprenant des moyens d'assemblage qui sont adaptés pour assembler mécaniquement le manchon à ladite collerette et qui comprennent une protubérance circonférentielle continue formée d'un seul tenant avec le manchon.

A cet effet, un dispositif selon l'invention est tel que ladite protubérance s'étend en saillie radiale en appui contre ledit décrochement, sur une majorité de ladite hauteur radiale de décrochement.

On notera que l'invention rend ainsi possible l'obtention d'un assemblage mécanique de structure simple, robuste et durablement étanche entre un manchon polymérique moulable par injection (donc suivant des formes précises, reproductibles et variées) autour d'une douille métallique déformée de forme variable (i.e. interchangeable) pourvu qu'elle définisse une gorge pour la garniture d'étanchéité au contact de laquelle sont montés en butée ces moyens d'assemblage, tout en respectant l'intégrité du tuyau et en procurant un encombrement réduit en comparaison du dispositif du document US-A-5 226 680.

On notera également que ladite protubérance radiale selon l'invention montée contre la majeure partie du décrochement de la douille peut être formée simplement par déformation plastique à chaud, comme décrit ci-dessous, donc avec un coût de fabrication réduit.

On notera en outre que la garniture d'étanchéité logée dans la gorge définie à la fois par le manchon et la collerette de la douille peut être tout joint par exemple à armature rigide, et que l'organe de verrouillage utilisé peut être toute épingle métallique. Il résulte de cette interchangeabilité entre douilles, organes de verrouillage et garnitures d'étanchéité, qu'un dispositif de raccordement selon l'invention peut être fabriqué avec un investissement en outillage réduit et donc un coût également réduit, indépendamment de la douille, de la garniture et de l'organe de verrouillage à utiliser.

Le ou l'un au moins des polymères utilisables pour former le manchon, ou au moins sa matrice plastique pour un manchon composite, peuvent être tous polymères thermoplastiques tels que du PBT (polybutylène téréphtalate), un polyamide (e.g. PA 6, PA 6.6, PA 46) ou un coupage de plusieurs de ces polymères, à titre non limitatif.

La douille peut être réalisée en un acier inoxydable, un acier avec ou sans traitement de surface ou en un alliage de métaux comprenant par exemple de l'aluminium, à titre non limitatif.

D'une manière générale :
- le manchon peut être moulé par injection d'une matière plastique ou composite à matrice plastique et présenter une face radialement interne sur laquelle est venu de moulage au moins un bourrelet circonférentiel en regard de ladite portion tubulaire de la douille qui est métallique, ledit au moins un bourrelet étant adapté pour coopérer avec une face radialement externe de préférence corruguée dudit tuyau, ce(s) bourrelet(s) qui forment avantageusement une succession de corrugations pour le manchon permettant d'améliorer la résistance à l'arrachement globale du tuyau ; et
- ladite portion tubulaire de la douille peut présenter au moins un renflement circonférentiel obtenu par mandrinage et adapté pour coopérer avec une face interne dudit tuyau destiné à être enserré par le manchon.

Quant au tuyau souple, il peut être réalisé en un matériau élastomère choisi parmi les caoutchoucs et les élastomères thermoplastiques (TPE).

Selon un autre aspect général de l'invention, le dispositif peut incorporer ladite garniture d'étanchéité qui est logée dans ladite gorge et qui comprend au moins un joint par exemple torique ou à lèvre.

Selon une autre caractéristique de l'invention, ladite protubérance peut s'étendre de manière allongée radialement vers l'intérieur à partir de ladite partie radialement interne du manchon, sur sensiblement toute ladite hauteur radiale de décrochement.

Avantageusement, ladite protubérance peut s'étendre sur toute ladite hauteur radiale de décrochement et présenter en section axiale une géométrie oblongue ou profilée qui est radialement allongée et qui se termine par un bord radialement interne en appui contre ladite portion tabulaire de la douille.

On notera que cette forme radialement allongée de la protubérance lui confère une géométrie axialement aplatie, qui est ainsi circonférentiellement plus haute que large respectivement dans les directions radiale et axiale, étant de préférence au moins deux fois et par exemple au moins quatre fois plus haute que large.

Encore plus avantageusement, ladite géométrie axiale :
- si elle est oblongue, peut être sensiblement en forme de rectangle tronqué qui présente deux grands côtés radiaux et deux petits côtés axiaux et arrondis (par « rectangle tronqué », on entend ici que la protubérance a son grand côté de liaison avec le reste du manchon qui n'est visible qu'en partie), et
- si elle est profilée, peut présenter une largeur axiale qui décroît radialement vers l'intérieur sur ladite hauteur radiale de décrochement, ladite protubérance présentant un contour externe convexe de section axiale sensiblement en arc de cercle.

Selon une autre caractéristique de l'invention, ladite protubérance peut comprendre :
- une portion radialement externe s'étendant radialement vers l'extérieur de ladite extrémité axiale de la douille jusqu'à un bord radialement externe de ladite protubérance, et
- une portion radialement interne s'étendant radialement vers l'intérieur de ladite extrémité axiale de la douille jusqu'à un bord radialement interne de ladite protubérance.

Selon une autre caractéristique de l'invention, le manchon peut présenter une partie radialement externe qui est située en regard de ladite portion tubulaire de la douille et qui est destinée à entourer ledit tuyau, ladite protubérance pouvant s'étendre en saillie radialement vers l'extérieur jusqu'audit bord radialement externe qui est sensiblement monté au contact de ladite partie radialement externe.

Avantageusement, ledit bord radialement interne et ledit bord radialement externe de ladite protubérance peuvent présenter une forme convexe.

Selon une autre caractéristique de l'invention, le manchon peut être avantageusement à base d'une matière plastique ou composite à matrice plastique moulée par injection, et ladite protubérance peut être obtenue par déformation plastique à chaud d'une saillie annulaire axiale que présente initialement ladite partie radialement interne du manchon à la place de ladite protubérance, en regard de ladite portion tubulaire de la douille.

Avantageusement, ledit décrochement radial de la douille peut être relié à ladite extrémité axiale de cette douille par une première transition arrondie et/ou à ladite portion tubulaire par une seconde transition arrondie.

Selon une autre caractéristique de l'invention, ladite partie radialement interne du manchon peut présenter une zone circonférentielle axiale et une zone circonférentielle radiale la prolongeant radialement vers l'intérieur, et ladite extrémité axiale de la douille peut être montée radialement à l'intérieur et au contact de ladite zone axiale, ladite gorge annulaire comprenant deux parois latérales circonférentielles et radiales respectivement formées par ledit décrochement et par ladite zone radiale.

Selon un autre aspect général de l'invention, le dispositif peut incorporer ledit tuyau qui présente de préférence une face radialement externe corruguée, ladite protubérance présentant une hauteur radiale de protubérance qui est supérieure à ladite hauteur radiale de décrochement et qui est sensiblement égale à celle du tuyau qui est monté axialement contre ladite protubérance.

Un procédé de fabrication selon l'invention d'un dispositif de raccordement tel que défini ci-dessus comprend les étapes suivantes :
a) mise en place, autour de la douille, d'une ébauche du manchon à base d'une matière plastique ou composite à matrice plastique moulée par injection, pour que ladite extrémité axiale de la douille soit coincée dans ladite partie radialement interne du manchon, laquelle se prolonge axialement par une saillie annulaire axiale de ladite ébauche en regard de ladite portion tubulaire de la douille, puis
b) chauffage et déformation plastique à chaud, de préférence par bouterollage, de ladite saillie annulaire axiale pour la transformer en ladite protubérance du manchon.

De manière usuelle, on appelle « bouterollage » une technique pour créer une liaison mécanique entre plusieurs pièces par déformation partielle d'une pièce en matériau plastique mise en oeuvre par refoulement de ce matériau.

Avantageusement, l'on peut mettre en oeuvre le chauffage et la déformation plastique à l'étape b) au moyen d'un générateur d'ultrasons associé à une sonotrode restituant à ladite saillie annulaire axiale l'énergie vibratoire des ultrasons générés.

En variante, on peut mettre en oeuvre le chauffage à l'étape b) par une technique choisie dans le groupe constitué par la friction par rotation, par vibrations, un miroir chauffant, un soufflage d'air chaud, un rayonnement infrarouge et un rayonnement laser.

D'autres caractéristiques, avantages et détails de la présente invention ressortiront à la lecture de la description suivante de plusieurs exemples de réalisation de l'invention, donnés à titre illustratif et non limitatif, la description étant réalisée en référence aux dessins joints, parmi lesquels :
la figure 1 est une vue schématique partielle en demi-section axiale d'une ébauche de manchon selon l'invention à l'intérieur de laquelle est monté une douille, en vue de former un dispositif de raccordement selon l'invention après déformation de l'ébauche,
la figure 2 est une vue schématique partielle en perspective de l'ébauche de manchon de la figure 1 montée sur cette douille,
la figure 3 est une vue schématique partielle en demi-section axiale d'un dispositif de raccordement selon un exemple de l'invention comprenant le manchon monté sur la douille et obtenu par déformation plastique de cette ébauche,
la figure 4 est une vue schématique partielle en perspective du dispositif de la figure 3,
la figure 5 est une vue schématique partiellement éclatée en demi-section axiale d'un dispositif de raccordement selon un autre exemple de l'invention montrant en outre l'embout mâle à introduire, l'organe de verrouillage du manchon sur cet embout mâle, un joint d'étanchéité à lèvre et le tuyau montés sur une douille à renflement obtenu par mandrinage,
la figure 6 est une vue schématique en demi-section axiale du dispositif de la figure 5 montrant l'organe de verrouillage du manchon, ce joint d'étanchéité à lèvre et ce tuyau monté sur la douille avant mandrinage, et
la figure 7 est une vue schématique en demi-section axiale d'un autre dispositif selon l'invention correspondant à une variante de la figure 6 montrant un autre manchon équipé de l'organe de verrouillage et monté sur la même douille renfermant ce joint à lèvre avant mandrinage.

Dans la présente description, les expressions « devant » ou « avant » désignent des positionnements relatifs selon l'axe de symétrie X de l'embout mâle, de la douille, du manchon et du tuyau qui sont tournés du côté de la direction d'insertion de l'embout mâle (i.e. vers l'organe de verrouillage), et « derrière » ou « arrière » désignent des positionnements relatifs selon l'axe X tournés à l'opposé de cette direction (i.e. du côté du tuyau).

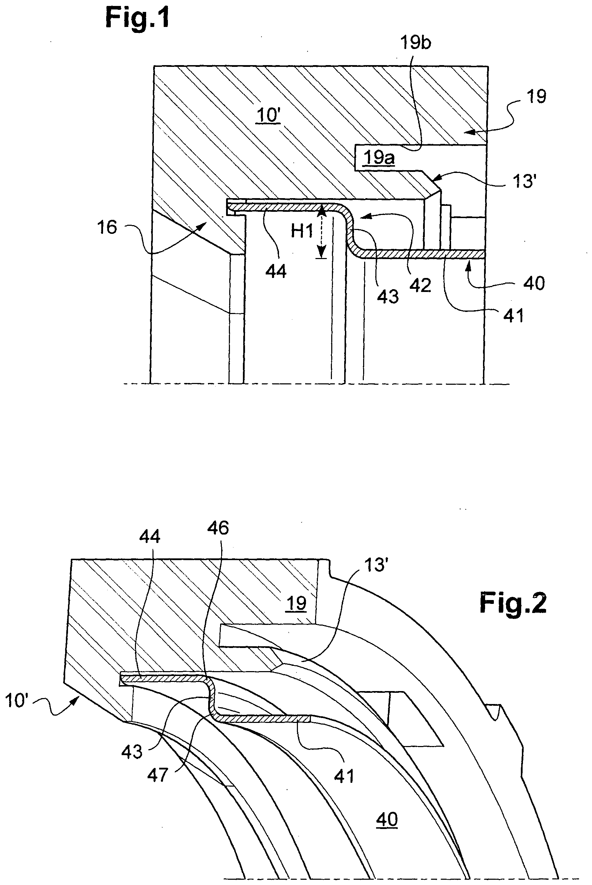

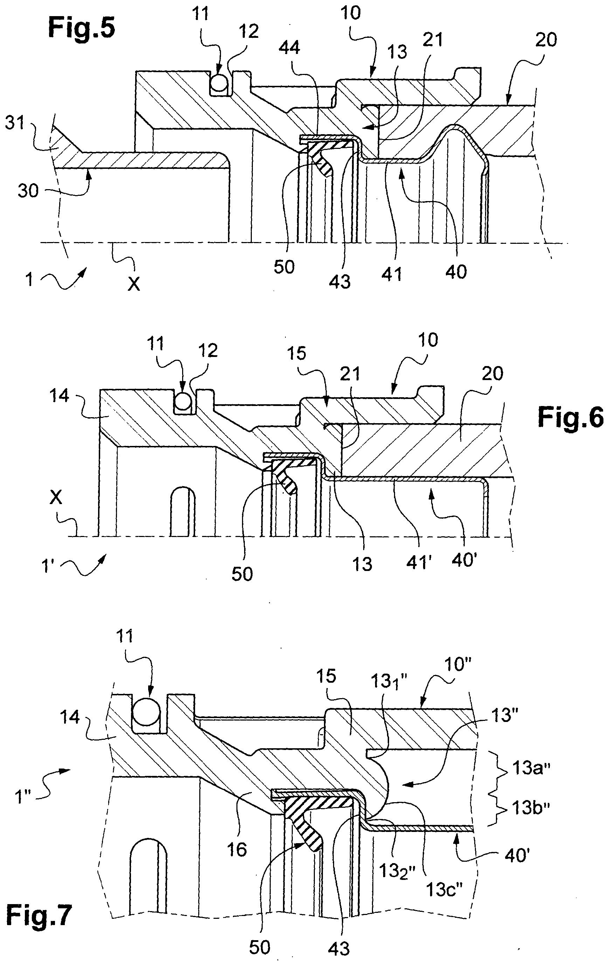

Le dispositif de raccordement 1, 1', 1" selon l'invention illustré aux figures 5, 6 et 7 comprend essentiellement :
- un manchon tubulaire 10, 10" à base d'une matière plastique ou composite à matrice plastique enserrant un tuyau souple 20 et verrouillant axialement un embout mâle 30 rigide (visible partiellement à la figure 5) par une épingle de verrouillage 11 en forme de U montée à travers le manchon 10, 10" et qui coopère avec une saillie périphérique 31 de l'embout mâle 30 (l'épingle 11 comporte dans cet exemple deux ailes de verrouillage élastiques réunies par une tête de préhension et enfoncées transversalement de manière réversible à travers une paire de lumières 12 formées à l'avant du manchon 10, 10" pour se bloquer par encliquetage en une position verrouillée contre la saillie 31 suite à l'insertion complète de l'embout mâle 30),
- une douille métallique 40, 40' comprenant une portion tubulaire 41, 41' destinée à être enserrée par le tuyau 20 et se terminant par une collerette 42 formée par un décrochement radial 43 se prolongeant par une extrémité axiale circonférentielle 44 de la douille 40 (la collerette 42 et l'extrémité 44 de la douille 40 sont plus clairement visibles aux figures 1-4),
- une garniture d'étanchéité 50 de préférence en caoutchouc qui est logée dans une gorge annulaire 51 formée radialement à l'intérieur de la collerette 42 et qui est montée en appui sur l'embout 30, la garniture 50 étant formée dans l'exemple illustré d'un joint à lèvre, et
- des moyens 13, 13" d'assemblage mécanique du manchon 10, 10" à la douille 40, 40' qui sont formés dans un plan transversal au manchon 10, 10" et à la douille 40 et qui sont montées en appui axialement derrière et contre le décrochement 43.

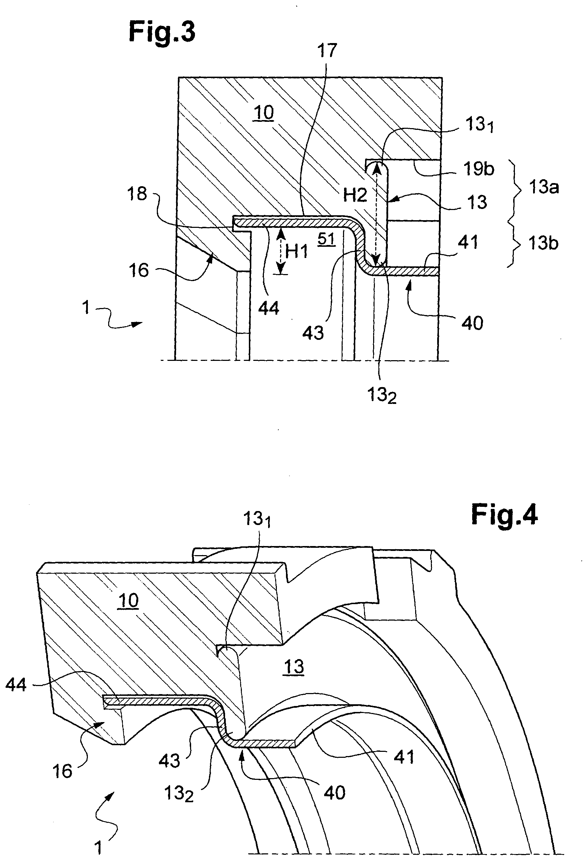

Selon l'invention, ces moyens d'assemblage 13, 13" font partie du manchon 10, 10" avec lequel ils sont formés d'un seul tenant et sont constitués d'une protubérance 13, 13" annulaire qui fait saillie de manière radialement oblongue (dans l'exemple des figures 3-6 pour la protubérance 13) ou bien profilée (dans l'exemple de la figure 7 pour la protubérance 13") en épousant le contour de la majeure partie du décrochement 43 et, dans les exemples illustrés, de toute la hauteur radiale H1 de ce décrochement 43.

Plus précisément, le manchon 10, 10", avantageusement moulé par injection, présente dans l'exemple des figures 1-7 une portion avant 14 qui est traversée par l'épingle de verrouillage 11, et une portion arrière 15 qui entoure la douille 40, 40' en incluant la protubérance 13, 13" et qui comprend une partie radialement interne 16 autour de la garniture d'étanchéité 50. Comme illustré aux figures 1 à 4, la partie radialement interne 16 présente à l'arrière une zone circonférentielle axiale 17 prolongée à l'avant et radialement vers l'intérieur par une zone circonférentielle radiale 18.

On voit aux figures 1 à 4 que la douille 40 a son extrémité axiale 44 enserrée à la fois par la zone axiale 17 et la zone radiale 18 du manchon 10 de sorte à être coincée dans la portion arrière 15. Quant à sa portion tubulaire 41, elle présente dans l'exemple de la figure 5 un renflement circonférentiel 45 obtenu par mandrinage que le tuyau 20 enserre avec déformation de sa face interne au montage. Dans les exemples illustrés, le décrochement 43 est relié à l'extrémité axiale 44 par une première transition arrondie 46 et à la portion tubulaire 41 par une seconde transition arrondie 47.

La gorge 51 recevant la garniture 50 est obtenue par une combinaison du manchon 10 et de la douille 40, et elle comprend :
- deux parois latérales de gorge circonférentielles et radiales respectivement avant et arrière, avec la paroi avant qui est formée par la zone radiale 18 du manchon 10 et la paroi arrière par le décrochement 43, et
- un fond circonférentiel de gorge qui est formé par l'extrémité axiale 44 de la douille 40.

Comme illustré aux figures 1-4, on obtient la protubérance radiale annulaire 13 en déformant plastiquement à chaud une saillie annulaire axiale 13' que comporte une ébauche 10' du manchon 10 au niveau de la partie radialement interne 16 de ce dernier, en regard de la portion tubulaire 41 de la douille 40. Dans l'exemple de ces figures, la saillie annulaire axiale 13' présente en section axiale une extrémité libre pointue et est séparée d'une partie radialement externe 19 du manchon 10 par un renfoncement axial annulaire 19a dont le bord axial radialement externe se prolonge par une face axiale circonférentielle 19b. La partie radialement externe 19 est située en regard de la portion tubulaire 41 et est destinée à enserrer le tuyau 20.

On met en oeuvre cette déformation plastique de la saillie axiale 13' par bouterollage, par exemple par l'action d'une sonotrode installée sur un système générateur d'ultrasons disposé à proximité immédiate de la saillie 13', On obtient suite à ce bouterollage la protubérance oblongue 13 en forme de rectangle tronqué à deux grands côtés radiaux avant et arrière et deux petits côtés axiaux reliés par deux zones arrondies de liaison formant un bord radialement externe 13₁ et un bord radialement interne 13₂ tous deux convexes (i.e. de section sensiblement en forme d'arc de cercle) pour la protubérance 13. Comme visible aux figures 3-4, ce bouterollage transforme la saille axiale 13' en la protubérance 13 en l'aplatissant axialement et en l'élargissant radialement, ce qui a pour effet de faire disparaître le renfoncement 19a.

On voit aux figures 3-4 que la protubérance 13 ainsi obtenue comprend :
- une portion radialement externe 13a s'étendant radialement vers l'extérieur de l'extrémité axiale 44 de la douille 40 jusqu'au bord externe 13₁ qui est monté au contact de la face axiale 19b de la partie radialement externe 19, et
- une portion radialement interne 13b de hauteur radiale sensiblement égale à celle de la portion externe 13a et s'étendant radialement vers l'intérieur de cette extrémité axiale 44 jusqu'au bord interne 13₂ qui est monté à la fois au contact du décrochement 43 et de la portion tubulaire 41.

On comprend ainsi que la protubérance 13 présente une hauteur radiale totale H2 qui est nettement supérieure à la hauteur radiale H1 du décrochement 43, et qui dans l'exemple illustré est supérieure au double de cette dernière (H2 > 2.H1).

On voit aux figures 5 et 6 que l'extrémité interne 21 du tuyau 20 est avantageusement montée axialement en butée contre la face arrière de la protubérance 13 suite au sertissage du tuyau 20, laquelle protubérance 13 est ainsi coincée axialement entre et au contact du décrochement 43 à l'avant et du tuyau 20 à l'arrière, sur toute la hauteur radiale de la protubérance H2 et du tuyau 20.

Le dispositif 1" illustré à la figure 7 se distingue uniquement de celui de la figure 6 en ce que la protubérance 13" du manchon 10" qu'il comprend présente une face arrière 13c" non pas droite en section axiale (contrairement à la face arrière radiale de la protubérance 13) mais convexe en arc de cercle, entre un bord radialement externe 13₁" de la portion radialement externe 13a" et un bord radialemement interne 13₂" de la portion radialement interne 13b" de la protubérance 13". Cette dernière présente ainsi une section axiale profilée, i.e. caractérisée par une largeur axiale qui décroît radialement vers l'intérieur au contact du décrochement 43 et qui confère à la protubérance 13" une section axiale en forme de griffe à face avant droite dans la direction radiale et à face arrière arrondie.

En référence aux exemples de réalisation de l'invention qui viennent d'être décrits, on notera que la garniture d'étanchéité 50 peut être rapportée librement ou être solidaire de la douille 40, 40' par exemple par surmoulage.

## Revendications

1. Dispositif de raccordement (1, 1', 1") adapté pour raccorder un embout mâle (30) rigide à un tuyau femelle (20) souple, le dispositif comprenant :
- un manchon (10, 10") adapté pour enserrer le tuyau et verrouiller axialement l'embout, le manchon présentant une partie radialement interne (16) destinée à entourer une garniture d'étanchéité annulaire (50) montée en appui sur l'embout, et
- une douille (40, 40') comprenant une portion tubulaire (41, 41') destinée à être enserrée par le tuyau et se terminant par une collerette (42) comprenant un décrochement radial (43) qui se prolonge par une extrémité axiale (44) de la douille et qui présente une hauteur radiale de décrochement (H1), ladite extrémité axiale étant montée radialement à l'intérieur et au contact de ladite partie radialement interne et formant un fond d'une gorge annulaire (51) adaptée pour recevoir la garniture,
le dispositif comprenant des moyens d'assemblage (13) qui sont adaptés pour assembler mécaniquement le manchon à ladite collerette et qui comprennent une protubérance circonférentielle continue (13, 13") formée d'un seul tenant avec le manchon,
**caractérisé en ce que** ladite protubérance s'étend en saillie radiale en appui contre ledit décrochement, sur une majorité de ladite hauteur radiale de décrochement.

2. Dispositif de raccordement (1, 1', 1") selon la revendication 1, **caractérisé en ce que** ladite protubérance (13, 13") s'étend de manière allongée radialement vers l'intérieur à partir de ladite partie radialement interne (16) du manchon (10, 10"), sur sensiblement toute ladite hauteur radiale de décrochement (H1).

3. Dispositif de raccordement (1, 1', 1") selon la revendication 2, **caractérisé en ce que** ladite protubérance (13, 13") s'étend sur toute ladite hauteur radiale de décrochement (H1) et présente en section axiale une géométrie oblongue ou profilée qui est radialement allongée et qui se termine par un bord radialement interne (13₂) en appui contre ladite portion tubulaire (41, 41') de la douille (40, 40').

4. Dispositif de raccordement (1, 1') selon la revendication 3, **caractérisé en ce que** ladite géométrie est oblongue et sensiblement en forme de rectangle tronqué qui présente deux grands côtés radiaux et deux petits côtés axiaux et arrondis.

5. Dispositif de raccordement (1") selon la revendication 3, **caractérisé en ce que** ladite géométrie est profilée avec une largeur axiale qui décroît radialement vers l'intérieur sur ladite hauteur radiale de décrochement (H1), ladite protubérance (13") présentant un contour externe convexe de section axiale sensiblement en arc de cercle.

6. Dispositif de raccordement (1, 1', 1") selon une des revendications précédentes, **caractérisé en ce que** ladite protubérance (13, 13") comprend :
- une portion radialement externe (13a, 13a") s'étendant radialement vers l'extérieur de ladite extrémité axiale (44) de la douille (40, 40') jusqu'à un bord radialement externe (13₁, 13₁") de ladite protubérance, et
- une portion radialement interne (13b, 13b") s'étendant radialement vers l'intérieur de ladite extrémité axiale de la douille jusqu'à un bord radialement interne (13₂, 13₂") de ladite protubérance.

7. Dispositif de raccordement (1, 1') selon la revendication 6, **caractérisé en ce que** le manchon (10) présente une partie radialement externe (19) qui est située en regard de ladite portion tubulaire (41, 41') de la douille (40, 40') et qui est destinée à entourer ledit tuyau (20), ladite protubérance (13) s'étendant en saillie radialement vers l'extérieur jusqu'audit bord radialement externe (13₁) qui est sensiblement monté au contact de ladite partie radialement externe (19).

8. Dispositif de raccordement (1, 1', 1") selon une des revendications précédentes, **caractérisé en ce que** le manchon (10, 10") est à base d'une matière plastique ou composite à matrice plastique moulée par injection.

9. Dispositif de raccordement (1, 1', 1") selon une des revendications précédentes, **caractérisé en ce que** pour la douille (40, 40'), ledit décrochement radial (43) est relié à ladite extrémité axiale (44) par une première transition arrondie (46) et/ou à ladite portion tubulaire (41, 41') par une seconde transition arrondie (47).

10. Dispositif de raccordement (1, 1', 1") selon une des revendications précédentes, **caractérisé en ce que** ladite partie radialement interne (16) du manchon (10, 10") présente une zone circonférentielle axiale (17) et une zone circonférentielle radiale (18) la prolongeant radialement vers l'intérieur, et **en ce que** ladite extrémité axiale (44) de la douille (40) est montée radialement à l'intérieur et au contact de ladite zone axiale, ladite gorge annulaire (51) comprenant deux parois latérales circonférentielles et radiales respectivement formées par ledit décrochement (43) et par ladite zone radiale (18).

11. Dispositif de raccordement (1, 1', 1") selon une des revendications précédentes, **caractérisé en ce que** ladite portion tubulaire (41) de la douille (40) présente au moins un renflement circonférentiel (45) obtenu par mandrinage et adapté pour coopérer avec une face interne dudit tuyau (20) destiné à être enserré par le manchon (10, 10").

12. Dispositif de raccordement (1, 1', 1") selon une des revendications précédentes, **caractérisé en ce que** le dispositif incorpore ladite garniture d'étanchéité (50) qui est logée dans ladite gorge (51) et qui comprend au moins un joint par exemple torique ou à lèvre.

13. Dispositif de raccordement (1, 1', 1") selon une des revendications précédentes, **caractérisé en ce que** le dispositif incorpore ledit tuyau (20), ladite protubérance (13, 13") présentant une hauteur radiale de protubérance (H2) qui est supérieure à ladite hauteur radiale de décrochement (H1) et qui est sensiblement égale à celle du tuyau qui est monté axialement contre ladite protubérance.

14. Procédé de fabrication d'un dispositif (1, 1', 1") selon une des revendications précédentes, **caractérisé en ce que** le procédé comprend les étapes suivantes :
a) mise en place, autour de la douille (40, 40'), d'une ébauche (10') du manchon (10, 10") à base d'une matière plastique ou composite à matrice plastique moulée par injection, pour que ladite extrémité axiale (44) de la douille (40, 40') soit coincée dans ladite partie radialement interne (16) du manchon, laquelle se prolonge axialement par une saillie annulaire axiale (13') de ladite ébauche en regard de ladite portion tubulaire (41, 41') de la douille, puis
b) chauffage et déformation plastique à chaud, de préférence par bouterollage, de ladite saillie annulaire axiale pour la transformer en ladite protubérance (13, 13") du manchon.

15. Procédé selon la revendication 14, **caractérisé en ce que** :
l'on met en oeuvre le chauffage et la déformation plastique à l'étape b) au moyen d'un générateur d'ultrasons associé à une sonotrode restituant à ladite saillie annulaire axiale (13') l'énergie vibratoire des ultrasons générés, ou
l'on met en oeuvre le chauffage à l'étape b) par une technique choisie dans le groupe constitué par la friction par rotation, par vibrations, un miroir chauffant, un soufflage d'air chaud, un rayonnement infrarouge et un rayonnement laser.

## Patentansprüche

1. Verbindungsvorrichtung (1, 1', 1"), die geeignet ist, einen starren Stecknippel (30) mit einer Schlauchbuchse (20) zu verbinden, wobei die Vorrichtung Folgendes umfasst:
- eine Muffe (10, 10"), die geeignet ist, den Schlauch einzuspannen und den Nippel axial zu verriegeln, wobei die Muffe einen radial inneren Abschnitt (16) aufweist, der dazu bestimmt ist, eine ringförmige Dichtung (50) zu umgeben, die am Nippel anliegend montiert ist, und
- eine Hülse (40, 40'), einen rohrförmigen Abschnitt (41, 41') umfassend, der dazu bestimmt ist, durch den Schlauch eingespannt zu werden, und die in einem Flansch (42) endet, der eine radiale Vertiefung (43) umfasst, die durch ein axiales Ende (44) der Hülse verläuft und eine radiale Vertiefungshöhe (H1) aufweist, wobei das axiale Ende radial im Inneren und in Kontakt mit dem radial inneren Abschnitt montiert ist und einen Boden einer ringförmigen Nut (51) bildet, die zur Aufnahme der Dichtung geeignet ist,
wobei die Vorrichtung Fügemittel (13) umfasst, die geeignet sind, die Muffe mechanisch mit dem Flansch zusammenzufügen, und die einen durchgehenden umlaufenden Vorsprung (13, 13") umfassen, der in einem Stück mit der Muffe ausgebildet ist,
**dadurch gekennzeichnet, dass** sich der Vorsprung in radialem Überstand an der Vertiefung anliegend über einen Großteil der radialen Vertiefungshöhe erstreckt.

2. Verbindungsvorrichtung (1, 1', 1") nach Anspruch 1, **dadurch gekennzeichnet, dass** sich der Vorsprung (13, 13") ab dem radial inneren Abschnitt (16) der Muffe (10, 10") über im Wesentlichen die gesamte radiale Vertiefungshöhe (H1) länglich radial in das Innere erstreckt.

3. Verbindungsvorrichtung (1, 1', 1") nach Anspruch 2, **dadurch gekennzeichnet, dass** sich der Vorsprung (13, 13") über die gesamte radiale Vertiefungshöhe (H1) erstreckt und in der axialen Sektion eine längliche oder profilierte Geometrie aufweist, die radial verlängert ist und in einem radial inneren Rand (13₂) endet, der an dem rohrförmigen Abschnitt (41, 41') der Hülse (40, 40') anliegt.

4. Verbindungsvorrichtung (1, 1') nach Anspruch 3, **dadurch gekennzeichnet, dass** die Geometrie länglich und im Wesentlichen in Form eines abgeschnittenen Rechtecks ist, das zwei große radiale Seiten und zwei kleine axiale und abgerundete Seiten aufweist.

5. Verbindungsvorrichtung (1") nach Anspruch 3, **dadurch gekennzeichnet, dass** die Geometrie mit einer axialen Breite profiliert ist, die über die radiale Vertiefungshöhe (H1) radial nach innen abnimmt, wobei der Vorsprung (13") eine konvexe Außenkontur mit im Wesentlichen kreisbogenförmigem axialem Querschnitt aufweist.

6. Verbindungsvorrichtung (1, 1', 1") nach einem der vorstehenden Ansprüche, **dadurch gekennzeichnet, dass** der Vorsprung (13, 13") Folgendes umfasst:
- einen radial äußeren Abschnitt (13a, 13a"), der sich von dem axialen Ende (44) der Hülse (40, 40') bis zu einem radial äußeren Rand (13₁, 13₁") des Vorsprungs radial nach außen erstreckt, und
- einen radial inneren Abschnitt (13b, 13b"), der sich von dem axialen Ende der Hülse bis zu einem radial inneren Rand (13₂, 13₂") des Vorsprungs radial nach innen erstreckt.

7. Verbindungsvorrichtung (1, 1') nach Anspruch 6, **dadurch gekennzeichnet, dass** die Muffe (10) einen radial äußeren Abschnitt (19) aufweist, der dem rohrförmigen Abschnitt (41, 41') der Hülse (40, 40') gegenüberliegt und dazu bestimmt ist, den Schlauch (20) zu umgeben, wobei sich der Vorsprung (13) im Überstand radial nach außen bis zu dem radial äußeren Rand (13₁) erstreckt, der im Wesentlichen in Kontakt mit dem radial äußeren Abschnitt (19) montiert ist.

8. Verbindungsvorrichtung (1, 1', 1") nach einem der vorstehenden Ansprüche, **dadurch gekennzeichnet, dass** die Muffe (10, 10") auf Basis eines spritzgegossenen Kunst- oder Verbundstoffs mit Kunststoffmatrix hergestellt ist.

9. Verbindungsvorrichtung (1, 1', 1") nach einem der vorstehenden Ansprüche, **dadurch gekennzeichnet, dass** für die Hülse (40, 40') die radiale Vertiefung (43) mit dem axialen Ende (44) durch einen ersten gerundeten Übergang (46) und/oder mit dem rohrförmigen Abschnitt (41, 41') durch einen zweiten gerundeten Übergang (47) verknüpft ist.

10. Verbindungsvorrichtung (1, 1', 1") nach einem der vorstehenden Ansprüche, **dadurch gekennzeichnet, dass** der radial innere Teil (16) der Muffe (10, 10") eine axiale umlaufende Zone (17) und eine radiale umlaufende Zone (18) aufweist, die sie radial nach innen verlängert, und dadurch, dass das axiale Ende (44) der Hülse (40) radial innerhalb und in Kontakt mit der axialen Zone montiert ist, wobei die ringförmige Nut (51) zwei umlaufende und radiale Seitenwände umfasst, die jeweils durch die Vertiefung (43) und durch die radiale Zone (18) gebildet werden.

11. Verbindungsvorrichtung (1, 1', 1") nach einem der vorstehenden Ansprüche, **dadurch gekennzeichnet, dass** der rohrförmige Abschnitt (41) der Hülse (40) mindestens einen umlaufenden Wulst (45) aufweist, der durch Aufmuffen erhalten wird und geeignet ist, mit einer Innenfläche des Schlauches (20) zusammenzuwirken, und der dazu bestimmt ist, durch die Muffe (10, 10") eingespannt zu werden.

12. Verbindungsvorrichtung (1, 1', 1") nach einem der vorstehenden Ansprüche, **dadurch gekennzeichnet, dass** die Vorrichtung die in der Nut (51) aufgenommene Dichtung (50) umfasst, die mindestens beispielsweise einen O-Ring oder eine Lippendichtung umfasst.

13. Verbindungsvorrichtung (1, 1', 1") nach einem der vorstehenden Ansprüche, **dadurch gekennzeichnet, dass** die Vorrichtung den Schlauch (20) aufnimmt, wobei der Vorsprung (13, 13") eine radiale Vorsprunghöhe (H2) aufweist, die größer als die radiale Vertiefungshöhe (H1) ist und die im Wesentlichen gleich jener des Schlauches ist, der axial gegen den Vorsprung montiert ist.

14. Verfahren zur Herstellung einer Vorrichtung (1, 1', 1") nach einem der vorstehenden Ansprüche, **dadurch gekennzeichnet, dass** das Verfahren die folgenden Schritte umfasst:
a) Platzieren eines Rohlings (10') der Muffe (10, 10"), der aus einem spritzgegossenen Kunststoff- oder Verbundmaterial mit Kunststoffmatrix besteht, um die Hülse (40, 40') herum, damit das axiale Ende (44) der Hülse (40, 40') in dem radial inneren Abschnitt (16) der Muffe eingeklemmt ist, der sich durch einen ringförmigen axialen Überstand (13') des Rohlings gegenüber dem rohrförmigen Abschnitt (41, 41') der Hülse axial verläuft, und dann
b) Erwärmen und Warmumformen, vorzugsweise durch Aufweiten, des axialen ringförmigen Überstands, um ihn in den Vorsprung (13, 13") der Muffe umzuwandeln.

15. Verfahren nach Anspruch 14, **dadurch gekennzeichnet, dass**:
man die Erwärmung und Umformung in Schritt b) mittels eines Ultraschallgenerators durchführt, der mit einer Sonotrode verbunden ist, die die Schwingungsenergie des erzeugten Ultraschalls auf den axialen ringförmigen Überstand (13') überträgt, oder
man die Erwärmung in Schritt b) durch ein Verfahren durchführt, das aus der Gruppe ausgewählt wird, die Rotationsreibung, Schwingungen, Wärmspiegel, Heißluftgebläse, Infrarotstrahlung und Laserstrahlung gebildet wird.

## Claims

1. A coupling device (1, 1', 1") suitable for connecting a rigid male endpiece (30) to a flexible female pipe (20), the device comprising:
- a sleeve (10, 10") suitable for gripping the pipe and axially locking the endpiece, the sleeve having a radially inner part (16) intended to surround an annular sealing lining (50) mounted bearing on the endpiece, and
- a socket (40, 40') comprising a tubular portion (41, 41') intended to be gripped by the pipe and ending with a collar (42) comprising a radial step (43) that extends by an axial end (44) of the socket and that has a radial step height (H1), said axial end being mounted radially inside and in contact with said radially inner part and forming a bottom of an annular groove (51) suitable for receiving the lining,
the device comprising assembly means (13) that are suitable for mechanically assembling the sleeve to said collar and that comprise a continuous circumferential protuberance (13, 13") formed in a single piece with the sleeve,
**characterized in that** said protuberance extends protruding bearing radially against said step, over a majority of said radial step height.

2. The coupling device (1, 1', 1") according to claim 1, **characterized in that** said protuberance (13, 13") extends in a manner radially elongated inward from said radially inner part (16) of the sleeve (10, 10"), over substantially all of said radial step height (H1).

3. The coupling device (1, 1', 1") according to claim 2, **characterized in that** said protuberance (13, 13") extends over all of said radial step height (H1) and has, in axial section, an oblong or profiled geometry that is radially elongated and that ends with a radially inner rim (13₂) bearing against said tubular portion (41, 41') of the socket (40, 40').

4. The coupling device (1, 1') according to claim 3, **characterized in that** said geometry is oblong and substantially in the shape of a truncated rectangle that has two radial large sides and two axial and rounded small sides.

5. The coupling device (1') according to claim 3, **characterized in that** said geometry is profiled with an axial width that decreases radially inward over said radial step height (H1), said protuberance (13") having a convex outer contour with an axial section substantially in the shape of an arc of circle.

6. The coupling device (1, 1', 1") according to one of the preceding claims, **characterized in that** said protuberance (13, 13") comprises:
- a radially outer portion (13a, 13a") extending radially toward the outside of said axial end (44) of the socket (40, 40') up to a radially outer edge (13₁, 13₁") of said protuberance, and
- a radially inner portion (13b, 13b") extending radially toward the inside of said axial end of the socket up to a radially inner edge (13₂, 13₂") of said protuberance.

7. The coupling device (1, 1') according to claim 6, **characterized in that** the sleeve (10) has a radially outer part (19) that is situated across from said tubular portion (41, 41') of the socket (40, 40') and that is intended to surround said pipe (20), said protuberance (13) extending protruding radially outward up to said radially outer edge (13₁), which is substantially mounted in contact with said radially outer part (19).

8. The coupling device (1, 1', 1") according to one of the preceding claims, **characterized in that** the sleeve (10, 10") has a base of a plastic or a composite material with a plastic matrix that is injection molded.

9. The coupling device (1, 1', 1") according to one of the preceding claims, **characterized in that** for the socket (40, 40'), said step (43) is connected to said axial end (44) by a first rounded transition (46) and/or to said tubular portion (41, 41') by a second rounded transition (47).

10. The coupling device (1, 1', 1") according to one of the preceding claims, **characterized in that** said radially inner part (16) of the sleeve (10, 10") can have an axial circumferential zone (17) and a radial circumferential zone (18) extending it radially inward, and **in that** said axial end (44) of the socket (40) is mounted radially inside and in contact with said axial zone, said annular groove (51) comprising two circumferential and radial side walls respectively formed by said step (43) and by said radial zone (18).

11. The coupling device (1, 1', 1") according to one of the preceding claims, **characterized in that** said tubular portion (41) of the socket (40) has at least one circumferential bulge (45) obtained by rolling and suitable for cooperating with an inner face of said pipe (20) intended to be gripped by the sleeve (10, 10").

12. The coupling device (1, 1', 1") according to one of the preceding claims, **characterized in that** the device incorporates said sealing lining (50), which is housed in said groove (51) and which comprises at least one seal, for example an O-ring or a lip seal.

13. The coupling device (1, 1', 1") according to one of the preceding claims, **characterized in that** the device incorporates said pipe (20), said protuberance (13, 13") having a radial protuberance height (H2) that exceeds said radial step height (H1) and that is substantially equal to that of the pipe, which is mounted axially against said protuberance.

14. A method for producing a device (1, 1', 1") according to one of the preceding claims, **characterized in that** the method comprises the following steps:
a) placing, around the socket (40, 40'), a blank (10') of the sleeve (10, 10") with a base of a plastic or a composite material with a plastic matrix that is injection molded, in order for said axial end (44) of the socket (40, 40') to be jammed in said radially inner part (16) of the sleeve, which extends axially by an axial annular protrusion (13') of said blank across from said tubular portion (41, 41') of the socket, then
b) heating and hot plastic deformation, preferably by heading, of said axial annular protrusion to transform it into said protuberance (13, 13") of the sleeve.

15. The method according to claim 14, **characterized in that**:
the heating and plastic deformation are implemented in step b) using an ultrasound generator associated with a sonotrode returning the vibrational energy from the generated ultrasounds to said axial annular protrusion (13'), or
the heating is implemented in step b) using a technique chosen from the group made up of rotational friction, vibrational friction, an electrically heated mirror, hot air blast, infrared radiation and laser radiation.
